# EUROPÄISCHE PATENTSCHRIFT

(11) **EP 0 721 496 B1**
(45) Veröffentlichungstag und Bekanntmachung des Hinweises auf die Patenterteilung: **15.07.1998**
(21) Anmeldenummer: 94918805.6
(22) Anmeldetag: 27.05.1994
(51) Int. Cl.: C11D 3/395, A01N 59/00, C11D 3/36

(54) **BLEICH- UND DESINFEKTIONSMITTEL**
BLEACHES AND DISINFECTANTS
DECOLORANTS ET DESINFECTANTS

(30) Priorität: 29.09.1993 DE 4333100
(43) Veröffentlichungstag der Anmeldung: 17.07.1996
(73) Patentinhaber: Henkel Kommanditgesellschaft auf Aktien, 40191 Düsseldorf (DE)
(72) Erfinder: OSSET, Miguel, E-08015 Barcelona (ES); MACHIN, Antonio, E-08013 Barcelona (ES); IBANEZ, Pilar, E-08020 Barcelona (ES); JOSA, Jaume, E-08022 Terrassa (ES)
(86) Internationale Anmeldenummer: EP9401733
(87) Internationale Veröffentlichungsnummer: WO9509227

(56) Entgegenhaltungen:
- EP-A- 0 137 551
- EP-A- 0 340 371
- DE-A- 2 903 980
- GB-A- 2 203 163
- DATABASE WPI Section Ch, Week 8630, Derwent Publications Ltd., London, GB; Class D25, AN 86-192326 & JP,A,61 123 700 (OSAKA SEIYAKU KK) 11. Juni 1986

## Beschreibung

### Gebiet der Erfindung

Die Erfindung betrifft neue wäßrige Bleich- und Desinfektionsmittel, enthaltend Alkalihypochlorite, Alkylethersulfate, Aminoxide, Aminoxidphosphonsäuren sowie gegebenenfalls Fettsäuresalze und weitere Hilfs- und Zusatzstoffe sowie die Verwendung von Aminoxidphosphonsäuren als Verdickungsmittel für wäßrige Bleich- und Desinfektionsmittel.

### Stand der Technik

In der Vergangenheit haben sich in den Bereichen Hygiene und Desinfektion solche Bleichmittel auf der Grundlage von Alkalimetallhypochloriten bewährt, die über eine bemerkenswerte Viskosität verfügen und sich daher sowohl für die Behandlung horizontaler als auch geneigter und vor allem vertikaler Oberflächen eignen. Die Viskosität dieser Mittel bewirkt, daß die Kontaktzeit zwischen diesen und den zu behandelnden Oberflächen wesentlich größer ist als bei handelsüblichen Flüssigprodukten, die rasch von der Oberfläce abfließen.

In der Vergangenheit hat es nicht an Versuchen gemangelt, derartig viskose Bleich- und Desinfektionsmittel bereitzustellen. So wurde beispielsweise gefunden, daß bestimmte Tenside oder Tensidgemische eine verdickende Wirkung auf wäßrige Hypochloritlösungen ausüben. In der **EP-A 0 274 885** (ICI) wird beispielsweise der Einsatz von Mischungen linearer und verzweigter Aminoxide empfohlen. Gemäß der Lehre der **EP-A 0 145 084** (Unilever) können für diesen Zweck auch Mischungen von Aminoxiden mit Seifen, Sarkosinaten, Tauriden oder Zukkerestern eingesetzt werden. Aus den Schriften **EP-A 0 137 551** und **EP-A 0 447 261** (Unilever) ist der Einsatz von Aminoxiden mit Seife oder Sarkosinat und weiteren anionischen Tensiden, beispielsweise Alkylsulfaten, Alkylethersulfaten, sekundären Alkansulfonaten oder Alkylbenzolsulfonaten als verdickende Komponente bekannt. Über die Verwendung von Alkylarylsulfonaten als Verdickungsmitteln in wäßrigen Bleichmitteln, die bestimmte Stilbenfarbstoffe als optische Aufheller enthalten, wird in der **EP-A 0 156 438** berichtet. Gegenstand der **ES-A 8801389** (Henkel Iberica) sind Bleichmittel auf Basis von wäßrigen Hypochloritlösungen, die als Tensidkomponente überwiegend Alkylethersulfate und daneben kleine Anteile an Aminoxiden enthalten.

Gegenstand der **DE-A1 38 10 107** sind maschinelle Geschirrspülmittel mit einem Gehalt von 0,5 bis 7 Gew.-% Polyacrylsäure, 0,4 bis 6 Gew.-% eines Phosphonats (z.B. Aminoxidphosphonsäuren) und 3 bis 15 Gew.-% Natriumhypochlorit. Als fakultative Komponente können die Mittel chlorstabile Tenside wie beispielsweise Aminoxide enthalten.

Aus der **EP-A1 0 447 261** sind schließlich wäßrige Bleichmittelzusammensetzungen mit einem Gehalt an Natriumhypochlorit und anionischen Tensiden bekannt. Die Hypochloritkonzentration dieser Mittel liegt jedoch bei 0,1 bis 8 und vorzugsweise 0,5 bis 5 Gew.-% Aktivchlor.

Trotz des umfangreichen Stands der Technik, der an dieser Stelle nur exemplarisch wiedergegeben werden kann, sind die Produkte des Marktes im Hinblick auf ihr Leistungsvermögen nach wie vor nicht völlig zufriedenstellend: die Viskosität ist häufig zu niedrig und/oder fällt bei längerer Lagerung infolge einer nichtausreichenden Chlorstabilität der Tensidkomponente stark ab, die Farbpigmente werden nicht ausreichend dispergiert und flokkulieren, gelöster Schmutz lagert sich wieder auf der Oberfläche ab und läßt diese stumpf erscheinen. Zur Erreichung einer erforderlichen Viskosität oberhalb von 100 mPa*s muß beispielsweise nach dem Stand der Technik das Hypochlorit in Mengen von mindestens 2 bis 3 Gew.-% eingesetzt werden. So hohe Hypochloritmengen greifen jedoch die oxidationsempfindlichen Farbstoffe an, so daß die Rezepturen bei Lagerung innerhalb von 4 bis 8 Wochen ihre Farbe verlieren.

Die Aufgabe der Erfindung hat somit darin bestanden, neue wäßrige Bleich- und Desinfektionsmittel zur Verfügung zu stellen, die frei von den geschilderten Nachteilen sind.

### Beschreibung der Erfindung

Gegenstand der Erfindung sind wäßrige Bleich- und Desinfektionsmittel, enthaltend
1 bis 2 Gew.-% Alkalihypochlorit,
1 bis 2 Gew.-% Alkylethersulfate,
1 bis 2 Gew.-% Aminoxide,
0,1 bis 1 Gew.-% Aminoxidphosphonsäuren und
- bezogen auf die Mittel - sowie gegebenenfalls weitere übliche Hilfs- und Zusatzstoffe.

Überraschenderweise wurde gefunden, daß bereits kleine Mengen von Aminoxiden auf Basis von Phosphonsäuren eine stark verdickende Wirkung der erfindungsgemäßen Mittel bewirken. Die Aminoxidphosphonsäuren verbessern die Chlorstabilität der Rezepturen und damit das Lagerverhalten und die Farbe der Produkte. Genauer gesagt, werden durch den Zusatz der Aminoxidphosphonsäuren erstmals Bleichmittel mit niedrigem Hypochloritgehalt und dennoch ausreichend hoher Viskosität zugänglich, die zudem durch schwankende Temperaturen nicht beeinflußt werden. Zugleich stabilisieren die Aminoxidphosphonsäuren die Dispersionen und verhindern eine Flokkulation der Farbpigmente. Des weiteren wirken sie einer erneuten Schmutzablagerung entgegen und erhöhen den Glanz der gereinigten Oberflächen.

### Alkalihypochlorite

Unter Alkalihypochloriten sind Lithium-, Kalium- und insbesondere Natriumhypochlorit zu verstehen. Die Hypochlorite können vorzugsweise in Mengen von 1,5 bis 2 Gew.-% - bezogen auf die Mittel - eingesetzt werden.

### Alkylethersulfate

Alkylethersulfate stellen bekannte anionische Tenside dar, die durch Sulfatierung von nichtionischen Tensiden vom Typ der Alkylpolyglycolether und nachfolgende Neutralisation erhalten werden. Die im Sinne der erfindungsgemäßen Mittel in Betracht kommenden Alkylethersulfate folgen der Formel **(I)**,

**R**^{**1**}**O-(CH**_{**2**}**CH**_{**2**}**O)**_{**n**}**SO**_{**3**}**X (I)**

in der R¹ für einen Alkylrest mit 12 bis 18, insbesondere 12 bis 14 Kohlenstoffatomen, n für Zahlen 2 bis 5, insbesondere 2 bis 3 und X für Natrium oder Kalium steht.

Typische Beispiele sind die Natriumsalze von Sulfaten des C_{12/14}-Kokosalkohol-2, -2,3- und -3-EO-Adduktes. Die Alkylethersulfate können eine konventionelle oder eingeengte Homologenverteilung aufweisen. Vorzugsweise werden die Alkylethersulfate in Mengen von 1,5 bis 2 Gew.-% - bezogen auf die Mittel - eingesetzt.

### Aminoxide

Auch Aminoxide stellen bekannte Stoffe dar, die gelegentlich den kationischen, in der Regel jedoch den nichtionischen Tensiden zugerechnet werden. Zu ihrer Herstellung geht man von tertiären Fettaminen aus, die üblicherweise entweder einen langen und zwei kurze oder zwei lange und einen kurzen Alkylrest aufweisen, und oxidiert sie in Gegenwart von Wasserstoffperoxid. Die im Sinne der Erfindung in Betracht kommenden Aminoxide folgen der Formel **(II)**, 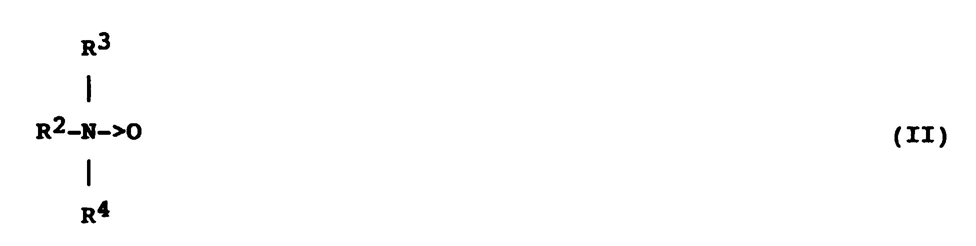 in der R² für einen linearen oder verzweigten Alkylrest mit 12 bis 18 Kohlenstoffatomen sowie R³ und R⁴ unabhängig voneinander für R² oder einen gegebenenfalls hydroxysubstituierten Alkylrest mit 1 bis 4 Kohlenstoffatomen stehen. Vorzugsweise werden Aminoxide der Formel **(II)** eingesetzt, in denen R² und R³ für C_{12/14}- bzw. C_{12/18}-Kokosalkylreste stehen und R⁴ einen Methyl- oder einen Hydroxyethylrest bedeutet. Ebenfalls bevorzugt sind Aminoxide der Formel **(II)**, in denen R² für einen C_{12/14}- bzw. C_{12/18}- Kokosalkylrest steht und R³ und R⁴ die Bedeutung eines Methyl- oder Hydroxyethylrestes haben. Vorzugsweise werden die Aminoxide in Mengen von 1,5 bis 2 Gew.-% - bezogen auf die Mittel - eingesetzt.

### Aminoxidphosphonsäuren

Aminoxidphosphonsäuren stellen Builder bzw. Sequestrierungsmittel dar, die beispielweise von der Fa.Bozetto/IT unter der Markenbezeichnung SEQUION^{(R)} vertrieben werden. Zu ihrer Herstellung geht man von Aminophosphonsäuren aus, die wie oben beschrieben, zum Aminoxid umgesetzt werden. Im Sinne der Erfindung können sowohl Mono- als auch Diaminoxide in Form der Phosphonsäuren bzw. deren Salze eingesetzt werden, die der Formel **(IV)** folgen, 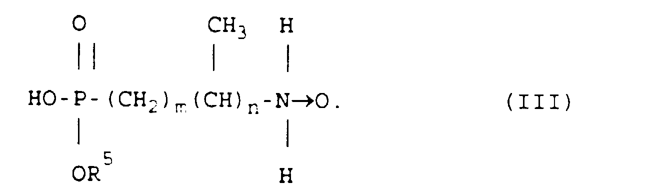 in der R⁵ für Wasserstoff, eine (CH₂)ₘ(CHCH₃)ₙNH₂O-Gruppe oder ein Alkalimetall, m für Zahlen von 1 bis 4 und n für 0 oder 1 steht.

Vorzugsweise werden Aminoxidphosphonsäuren eingesetzt, in denen R⁵ für Wasserstoff, m für 3 und n für 0 steht (Aminoxid auf Basis von Aminotrimethylenphosphonsäure). Die bevorzugte Einsatzkonzentration dieser Stoffe liegt im Bereich von 0,1 bis 0,4 Gew.-% - bezogen auf die Mittel.

### Fettsäuresalze

Als weitere Bestandteile können die erfindungsgemäßen Mittel Fettsäuresalze der Formel **(IV)** enthalten,

**R**^{**6**}**CO-OX (IV)**

in der R⁶CO für einen Acylrest mit 12 bis 22 Kohlenstoffatomen und X für ein Alkalimetall steht. Typische Beispiele sind die Natrium- und/oder Kaliumsalze der Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen, wie sie bei der Druckspaltung technischer Fette und Öle anfallen. Vorzugsweise werden Salze technischer Kokos- oder Talgfettsäuren eingesetzt. Da die erfindungsgemäßen Rezepturen stark alkalisch eingestellt sind, können anstelle der Salze auch die Fettsäuren eingesetzt werden, die beim Eintragen in die Mischung in situ neutralisiert werden. Vorzugsweise enthalten diejenigen erfindungsgemäßen Mittel als fakultative Komponente Fettsäuresalze, bei denen eine besondere Schaumarmut erwünscht ist.

### Hilfs- und Zusatzstoffe

Als Hilfs- und Zusatzstoffe kommen beispielsweise weitere chlorstabile Tenside bzw. Hydrotrope in Betracht, wie etwa Alkylsulfate, Alkylsulfonate, Alkylbenzolsulfonate, Xylolsulfonate, Sarkosinate, Tauride, Isethionate, Sulfosuccinate, Betaine, Zuckerester, Fettalkoholpolyglycolether und Alkyloligoglykoside. Vorzugsweise macht die Summe dieser zusätzlichen Tenside höchstens 10 Gew.-% der Gesamtmenge an Tensiden in der Rezeptur aus.

Die erfindungsgemäßen Mittel können Alkalimetallverbindungen enthalten, vozugsweise Natriumhydroxid oder Kaliumhydroxid, mit deren Hilfe der pH-Wert der Rezepturen auf einen optimalen Wert von 12,5 bis 14 eingestellt werden kann.

Darüberhinaus können die Mittel aktivchlorstabile Duftstoffe, optische Aufheller, Farbstoffe und Pigmente in Mengen von insgesamt 0,01 bis 0,5 Gew.-% - bezogen auf die Mittel - enthalten. Zu den als aktivchlorbeständig bekannten Duftstoffen zählen besipielsweise monocyclische und bicyclische Monoterpenalkohole sowie deren Ester mit Essig- oder Propionsäure (z.B. Isoborneal, Dihydroterpenöl, Isobornylacetat, Dihydroterpenylacetat). Bei den optischen Aufhellern kann es sich beispielsweise um das Kalisalz der 4,4'-bis-(1,2,3-Triazolyl)-(2-)-Stilbin-2,2-sulfonsäure handeln, das unter der Markenbezeichnung Phorwite^{(R)} BHC 766 vertrieben wird. Als Farbpigmente kommen u.a. grüne Chlorophthalocyanine (Pigmosol^{(R)} Green, Hostaphine^{(R)} Green) oder gelbes Solar Yellow BG 300 (Sandoz) in Frage.

Die Herstellung der erfindungsgemäßen Mittel erfolgt mittels Umrühren. Gegebenenfalls kann das erhaltene Produkt zur Abtrennung von Fremdkörpern und/oder Agglomeraten dekantiert oder filtriert werden.

### Gewerbliche Anwendbarkeit

Durch den Zusatz von Aminoxidphosphonsäuren kann die Viskosität der erfindungsgemäßen Mittel vorteilhaft angehoben werden. Gleichzeitig erhöhen diese Stoffe die Aktivchlorbeständigkeit der eingesetzten Tenside und damit die Lagerbeständigkeit der Produkte. Des weiteren wirken die Aminoxide auf Basis von Phosphonsäuren sowohl als Antiredeposition-Mittel als auch als Farbstoff-Dispergatoren. Die Mittel weisen zudem eine Viskosität oberhalb von 100 mPa*S - gemessen bei 20°C in einem Brookfield-Viskosimeter - auf.

Ein weiterer Gegenstand der Erfindung besteht somit in ihrer Verwendung als Hilfsstoffe, insbesondere als Verdickungsmittel für wäßrige Bleich- und Desinfektionsmittel auf Basis wäßriger Alkalihypochloritlösungen.

Die folgenden Beispiele sollen den Gegenstand der Erfindung näher erläutern, ohne ihn darauf einzuschränken.

### Beispiele

### I. Eingesetzte Rezepturen

**Tabelle 1:**

| Erfindungsgemäße und Vergleichsrezepturen; pH = 13,5 Prozentangaben als Gew.-%; Wasser ad 100 Gew.-% | | | | | | | | |
|---|---|---|---|---|---|---|---|---|
| | R1 % | R2* % | R3 % | R4 % | R5 % | R6 % | R7 % | R8* % |
| NaOCl | 1,0 | 1,0 | 1,5 | 1,5 | 1,5 | 2,0 | 1,0 | 1,0 |
| FAES | 2,0 | 2,0 | 1,8 | 1,8 | 2,0 | 2,0 | 2,0 | - |
| AO | 1,0 | 1,0 | 1,5 | 1,5 | 1,0 | 1,0 | 1,0 | 1,5 |
| SQ | 0,4 | - | 0,4 | 0,4 | 0,4 | 0,4 | 0,4 | - |
| P1 | + | + | + | + | + | + | - | + |
| P2 | - | - | - | - | - | - | + | - |
| Seife | - | - | - | 0,1 | - | - | 0,1 | 0,5 |

| | | | | | | | | |
|---|---|---|---|---|---|---|---|---|
| *Vergleichsrezeptur FAES = C_{12/14}-Kokosfettalkohol-2EO-Adduktsulfat-Na-Salz (Texapon^{(R)} LS-2, Henkel KGaA, Düsseldorf/FRG) AO = Dimethyl-kokosalkylaminoxid (Aromox^{(R)} DMMCD, Akzo/NL) SQ = Aminoxid auf Basis Aminotrimethylenphosphonsäure (Sequion^{(R)} CLR, Bozetto/IT); P1 = 0,005 Gew.-% Pigmosol^{(R)} Green 8730 (BASF, Ludwigshafen/FRG) P2 = 0,005 Gew.-% Solar Yellow (Sandoz, Basel/CH) Seife = Laurinsäure, technisch (Edenor^{(R)} C12 98/100, Henkel KGaA, Düsseldorf/FRG) | | | | | | | | |

### II. Viskositätsmessungen

Die Viskosität der erfindungsgemäßen Rezepturen R1, R3 bis R7 sowie der Vergleichsrezeptur R2 wurden nach Lagerung bei 20°C über einen Zeitraum von 24 Stunden sowie 2, 8 und 12 Wochen mit Hilfe eines Brookfield-Viskosimeters (Modell RCT, Spindel Nr.1 oder Nr.2, 200 Upm) bestimmt. Die Ergebnisse sind in Tabelle 2 zusammengefaßt:

**Tabelle 2:**

| Viskositätsmessungen | | | | | |
|---|---|---|---|---|---|
| **Bsp.** | **Rezeptur** | **Viskosität (mPas*s)** | | | |
| | | **24 h** | **2 w** | **8 w** | **12 w** |
| 1 | R1 | 240 | | 290 | 370 |
| 2 | R3 | 590 | 525 | | |
| 3 | R4 | 1300 | 1000 | | |
| 4 | R5 | 830 | | 800 | 1080 |
| 5 | R6 | 1900 | | 2050 | 2200 |
| 6 | R7 | 200 | | | 240 |
| V1 | R2 | 50 | | | |

Die Ergebnisse zeigen, daß Rezepturen ohne Sequion-Zusatz eine zu niedrige Viskosität aufweisen. Die erfindungsgemäßen Rezepturen weisen eine zufriedenstellende Viskosität oberhalb vom 100 mPa*s auf und sind zudem lagerstabil.

### III. Chlorstabilität

Die erfindungsgemäße Rezeptur R1 sowie die Vergleichsrezeptur R2 wurden über einen Zeitraum von 8 Wochen (w) unter dem Einfluß von Tageslicht in einer farblosen Kunststoff flasche gelagert und der Aktivchlorgehalt bestimmt. Die Ergebnisse sind in Tabelle 3 zusammengefaßt:

**Tabelle 3:**

| Abnahme des Aktivchlorgehaltes | | | | | | |
|---|---|---|---|---|---|---|
| **Bsp.** | **Rezeptur** | **Aktivchlorgehalt in %** | | | | |
| | | **0 w** | **1 w** | **2 w** | **4 w** | **8 w** |
| 8 | R1 | 100 | 82 | 81 | 80 | 63 |
| V2 | R2 | 100 | 92 | 86 | 60 | 48 |

Die Ergebnisse zeigen, daß der Zusatz von Sequion sich vorteilhaft auf die Chlorstabilität der Rezeptur auswirkt.

### IV. Lagerstabilität

Die Lagerstabilität der erfindungsgemäßen Rezeptur R1 und der Vergleichsrezeptur R8 (Produkt des spanischen Marktes) wurde über einen Zeitraum von 12 Wochen untersucht. Die Viskosität wurde dabei wieder wie in II) beschrieben bestimmt. Die Ergebnisse sind in Tabelle 4 zusammengefaßt:

**Tabelle 4:**

| Lagerstabilität | | | | | | | |
|---|---|---|---|---|---|---|---|
| **Bsp.** | **Rezeptur** | **Viskosität (mPa*s)** | | | | | |
| | | **0 w** | **1 w** | **2 w** | **5 w** | **8 w** | **12 w** |
| 9 | R1 | 240 | 210 | 245 | 270 | | 380 |
| V3 | R8 | 840 | 750 | 730 | | 410 | 150 |

Die Beispiele illustrieren die Aussage der Anmelderin, daß andere bekannte Formulierungen, beispielweise auf Basis von Aminoxiden und Seife, keine ausreichende Lagerstabilität aufweisen.

### V. Glanz

Zur Beurteilung des Glanzes wurden 1 gew.-%ige Verdünnungen der erfindungsgemäßen Rezeptur R1 und der Vergleichsrezeptur R2 hergestellt. Mit diesen Testlösungen wurden zwei standardisierte Keramikoberflächen behandelt und der Glanz mit Hilfe eines Reflektometers (Firma Dr.Lange, Meßwinkel 60°) gegen einen Standard von 100 % bestimmt. Die Ergebnisse stellen die Mittelwerte von drei Messungen dar und sind in Tabelle 5 zusammengefaßt:

**Tabelle 5:**

| Glanzmessung | | |
|---|---|---|
| **Bsp.** | **Rezeptur** | **Glanz %-rel** |
| 10 | R1 | 86 |
| V4 | R2 | 82 |

Die Ergebnisse zeigen, daß der Zusatz von Sequion zu einer Verbesserung des Glanzes auf den gereinigten Oberflächen führt.

## Patentansprüche

1. Wäßrige Bleich- und Desinfektionsmittel, enthaltend
1 bis 2 Gew.-% Alkalihypochlorit,
1 bis 2 Gew.-% Alkylethersulfate,
1 bis 2 Gew.-% Aminoxide und
0,1 bis 1 Gew.-% Aminoxidphosphonsäuren
- bezogen auf die Mittel - sowie gegebenenfalls weitere übliche Hilfs- und Zusatzstoffe.

2. Wäßrige Bleich- und Desinfektionsmittel nach Anspruch 1, **dadurch gekennzeichnet**, daß sie Natriumhypochlorit enthalten.

3. Wäßrige Bleich- und Desinfektionsmittel nach den Ansprüchen 1 und 2, **dadurch gekennzeichnet,** daß sie Alkylethersulfate der Formel (I) enthalten,
**R**^{**1**}**O-(CH**_{**2**}**CH**_{**2**}**O)**_{**n**}**SO**_{**3**}**X (I)**
in der R¹ für einen Alkylrest mit 12 bis 18 Kohlenstoffatomen, n für Zahlen 2 bis 5 und X für Natrium oder Kalium steht.

4. Wäßrige Bleich- und Desinfektionsmittel nach den Ansprüchen 1 bis 3, **dadurch gekennzeichnet,** daß sie Aminoxide der Formel (II) enthalten, 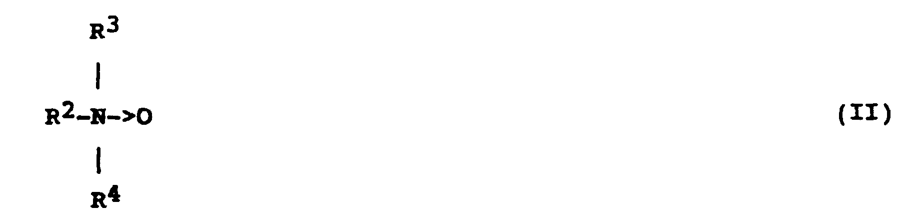 in der R² für einen linearen oder verzweigten Alkylrest mit 12 bis 18 Kohlenstoffatomen sowie R³ und R⁴ unabhängig voneinander für R² oder einen gegebenenfalls hydroxysubstituierten Alkylrest mit 1 bis 4 Kohlenstoffatomen stehen.

5. Wäßrige Bleich- und Desinfektionsmittel nach den Ansprüchen 1 bis 4, **dadurch gekennzeichnet,** daß sie Aminoxidphosphonsäuren der Formel (III) enthalten, 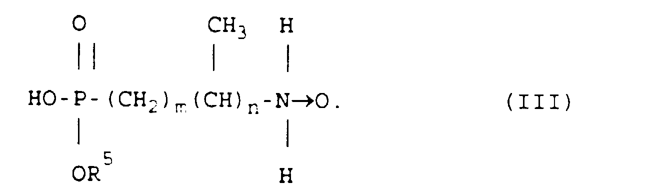 in der R⁵ für Wasserstoff, eine (CH₂)ₘ(CHCH₃)ₙNH₂O-Gruppe oder ein Alkalimetall, m für Zahlen von 1 bis 4 und n für 0 oder 1 steht.

6. Wäßrige Bleich- und Desinfektionsmittel nach den Ansprüchen 1 bis 5, **dadurch gekennzeichnet,** daß sie Fettsäuresalze der Formel (IV) enthalten,
**R**^{**6**}**CO-OX (IV)**
in der R⁶CO für einen Acylrest mit 12 bis 22 Kohlenstoffatomen und X für ein Alkalimetall steht.

7. Wäßrige Bleich- und Desinfektionsmittel nach den Ansprüchen 1 bis 5, **dadurch gekennzeichnet,** daß sie eine Viskosität oberhalb von 100 mPa*s - gemessen bei 20°C in einem Brookfield-Viskosimeter - aufweisen.

8. Verwendung von Aminoxidphosphonsäuren der Formel (III) nach den Ansprüchen 1 bis 7 als Verdickungsmittel für wäßrige Bleich- und Desinfektionsmittel auf Basis von Alkalihypochloritlösungen.

## Claims

1. Water-based bleaching and disinfecting formulations containing
1 to 2% by weight of alkali metal hypochlorite,
1 to 2% by weight of alkyl ether sulfates,
1 to 2% by weight of amine oxides,
0.1 to 1% by weight of amine oxide phosphonic acids
- based on the formulation - and optionally other typical auxiliaries and additives.

2. Water-based bleaching and disinfecting formulations as claimed in claim 1, characterized in that they contain sodium hypochlorite.

3. Water-based bleaching and disinfecting formulations as claimed in claims 1 and 2, characterized in that they contain alkyl ether sulfates corresponding to formula **(I)**:
**R**^{**1**}**O-(CH**_{**2**}**CH**_{**2**}**O)**_{**n**}**SO**_{**3**}**X (I)**
in which R¹ is an alkyl radical containing 12 to 18 carbon atoms, n is a number of 2 to 5 and X stands for sodium or potassium.

4. Water-based bleaching and disinfecting formulations as claimed in claims 1 to 3, characterized in that they contain amine oxides corresponding to formula **(II)**: 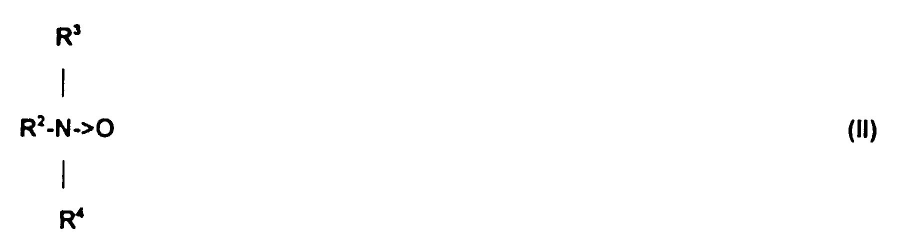 in which R² is a linear or branched alkyl radical containing 12 to 18 carbon atoms and R³ and R⁴ independently of one another have the same meaning as R² or represent an optionally hydroxy-substituted alkyl radical containing 1 to 4 carbon atoms.

5. Water-based bleaching and disinfecting formulations as claimed in claims 1 to 4, characterized in that they contain amine oxide phosphonic acids corresponding to formula **(III)**: 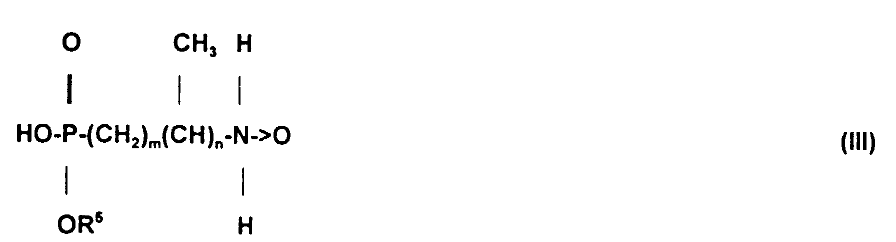 in which R⁵ is hydrogen, a (CH₂)ₘ(CHCH₃)ₙNH₂O group or an alkali metal, m is a number of 1 to 4 and n has a value of 0 or 1.

6. Water-based bleaching and disinfecting formulations as claimed in claims 1 to 5, charactenzed in that they contain fatty acid salts corresponding to formula **(IV)**:
**R**^{**6**}**CO-OX (IV)**
in which R⁶CO is an acyl radical containing 12 to 22 carbon atoms and X is an alkali metal.

7. Water-based bleaching and disinfecting formulations as claimed in claims 1 to 5, characterized in that they have a viscosity above 100 mPa·s, as measured at 20°C in a Brookfield viscosimeter.

8. The use of amine oxide phosphonic acids corresponding to formula **(III)** in claim 5 as thickeners for water-based bleaching and disinfecting formulations based on alkali metal hypochlorite solutions.

## Revendications

1. Agents décolorants et désinfectants aqueux contenant
de 1 à 2 % en poids d'hypochlorite alcalin,
de 1 à 2 % en poids d'éther sulfates d'alkyle,
de 1 à 2 % en poids d'oxydes d'amine,
de 0,1 à 1 % en poids d'acides aminoxyde-phosphoniques
- par rapport aux agents - ainsi que le cas échéant d'autres adjuvants et additifs.

2. Agents décolorants et désinfectant aqueux selon la revendication 1,
caractérisés en ce qu'
ils contiennent de l'hypochlorite de sodium.

3. Agents décolorants et désinfectant aqueux selon la revendication 1 et 2,
caractérisés en ce qu'
ils contiennent des éthers-sulfates d'alkyl de formule (I)
R¹O-(CH₂CH₂O)ₙSO₃X (I)
dans laquelle R¹ représente un radical alkyle ayant de 12 à 18 atomes de carbone, n représente des nombres allant de 2 à 5 et X représente le sodium ou le potassium.

4. Agents décolorants et désinfectants aqueux selon les revendications 1 à 3,
caractérisés en ce qu'
ils contiennent des oxydes d'amine de formule (II), 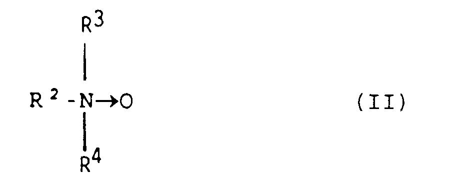 dans laquelle R² représente un radical alkyle linéaire ou ramifié ayant de 12 à 18 atomes de carbone, et R³ et R⁴ représentent indépendamment l'un de l'autre R² ou un radical alkyle ayant de 1 à 4 atomes de carbone éventuellement substitué par un hydroxy.

5. Agents décolorants et désinfectants aqueux selon les revendications 1 à 4,
caractérisés en ce qu'
ils contiennent des acides aminoxyde-phosphoniques de formule (III), 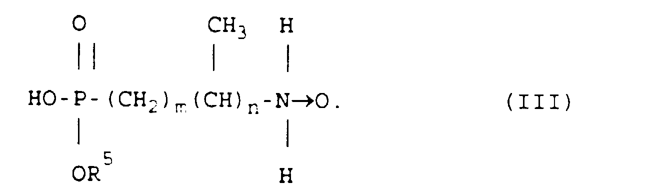 dans laquelle R⁵ représente un hydrogène, un groupe (CH₂)ₘ(CHCH₃)ₙNH₂O ou un métal alcalin, m représente des nombres allant de 1 à 4 et n vaut 0 ou 1.

6. Agents décolorants et désinfectants aqueux selon les revendications 1 à 5,
caractérisés en ce qu'
ils contiennent des sels d'acides gras de formule (IV)
R⁶CO-OX (IV)
dans laquelle R⁶ CO représente un radical acyle ayant de 12 à 22 atomes de carbone et X représente un métal alcalin.

7. Agents décolorants et désinfectants aqueux selon les revendications 1 à 5,
caractérisés en ce qu'
ils présentent une viscosité supérieure à 100 mPa.s - mesurée à 20°C dans un viscosimètre Brookfield.

8. Utilisation d'acides aminoxyde-phosphoniques de formule (III) selon les revendications 1 à 7 comme agents épaissants pour agents décolorants et désinfectants aqueux à base de solutions d'hypochlorites alcalins.
